# FASCICULE DE BREVET EUROPEEN

(11) **EP 2 028 036 B1**
(45) Date de publication et mention de la délivrance du brevet: **02.06.2010**
(21) Numéro de dépôt: 08300253.5
(22) Date de dépôt: 06.08.2008
(51) Int. Cl.: B60N 2/28, B60N 2/70

(54) **Banquette pour véhicule automobile et véhicule automobile avec une banquette**
Sitzbank für ein Kraftfahrzeug und Kraftfahrzeug mit einer Sitzbank
Bench seat for a vehicle and vehicle having a bench seat

(30) Priorité: 23.08.2007 FR 0705983
(43) Date de publication de la demande: 25.02.2009
(73) Titulaire: Renault SAS, 92100 Boulogne Billancourt (FR)
(72) Inventeur: Riou, Jean-Christophe, 78640, VILLIERS-SAINT-FREDERIC (FR)

(56) Documents cités:
- EP-A- 0 574 848
- EP-A- 0 619 202
- EP-A- 1 074 427
- EP-A- 1 721 777
- FR-A- 2 102 873
- FR-A- 2 698 832
- US-A- 3 515 431

## Description

L'invention concerne une banquette de véhicule automobile, particulièrement adaptée pour recevoir un siège enfant dans le cadre d'un véhicule utilitaire. Elle concerne aussi un véhicule automobile en tant que tel équipé d'une telle banquette.

La loi impose depuis peu l'utilisation de sièges enfants dans tous les types de véhicules automobiles. Ces sièges doivent pouvoir être fixés dos à la route ou face à la route. Leur agencement dos à la route est aujourd'hui réalisé grâce à une jambe de force ou béquille qui présente une longueur standard, est supposée reposer sur le plancher du véhicule pour soutenir l'arrière du siège enfant. Toutefois, cette longueur standardisée de béquille ne convient pas pour tous les véhicules. Par exemple notamment, ces sièges enfants ne conviennent pas dans les véhicules utilitaires qui présentent des sièges ou banquettes plus hautes que les véhicules de tourisme, sur lesquelles le siège enfant ne peut pas être maintenu par ses béquilles existantes, trop courtes pour prendre appui sur le plancher.

Du document EP 1 721 777 on connaît une banquette qui montre les caractéristiques du préambule de la revendication 1.

Il existe donc un besoin d'une solution pour asseoir les enfants en toute sécurité dans les véhicules de type utilitaires, notamment en position dos à la route, possédant des banquettes assez hautes et incompatibles avec les sièges enfants standardisés.

Pour cela, l'invention propose une banquette pour véhicule automobile selon la revendication 1.

La banquette pour véhicule automobile peut en outre comprendre un logement sous l'armature au niveau du pied pour ranger l'assise démontée.

L'invention porte aussi sur un véhicule automobile comprenant une banquette telle que décrite ci-dessus.

Ces objets, caractéristiques et avantages de la présente invention seront exposés en détail dans la description suivante de modes d'exécution particuliers faits à titre non-limitatif en relation avec les figures jointes parmi lesquelles :
La figure 1 représente une vue en perspective de côté d'un agencement d'un siège enfant dos à la route selon un premier mode d'exécution;
la figure 2 représente une vue en perspective agrandie de détails de la figure précédente;
la figure 3 représente une vue de côté d'un agencement d'un siège enfant dos à la route;
les figures 4 et 5 représentent schématiquement de côté la banquette selon l'invention;
la figure 6 représente de côté la banquette selon l'invention;
la figure 7 illustre en perspective arrière un principe de fixation d'un siège enfant sur une banquette selon l'invention.

L'invention repose sur le principe de ne pas modifier les sièges enfants tels que standardisés, mais d'adapter les agencements existants dans les véhicules automobiles afin qu'ils puissent accueillir ces sièges enfants même sur des banquettes plus hautes que prévues lors de l'élaboration du standard de siège enfant. Pour cela, le concept de l'invention repose sur un moyen permettant de réduire la distance entre l'assise de la banquette où se positionne le siège enfant et le plancher du véhicule, afin de pouvoir positionner un siège enfant dos à la route avec une béquille standard en toutes circonstances, et notamment dans le cas des véhicules utilitaires.

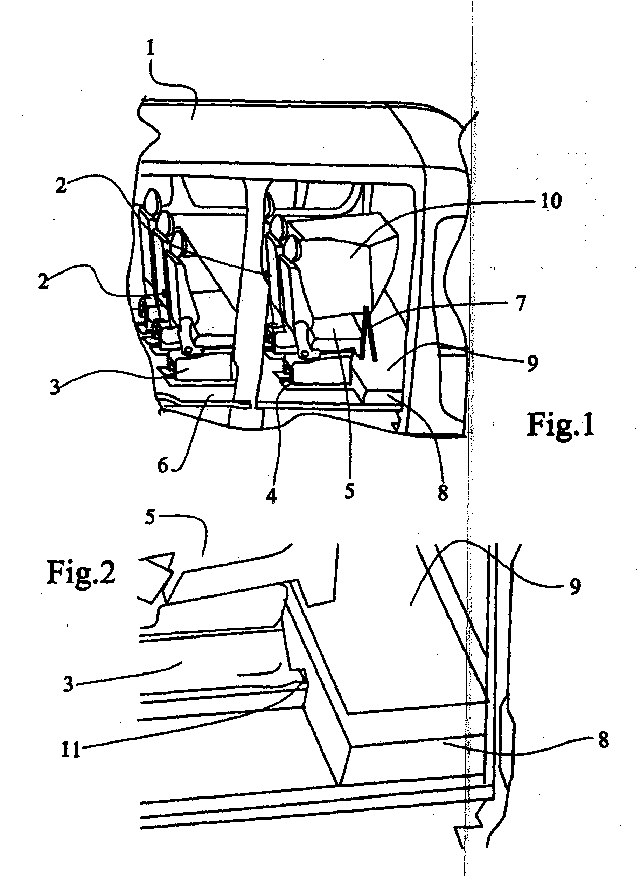

Les figures 1 à 3 montrent de côté une partie d'un véhicule utilitaire 1 comprenant plusieurs sièges ou banquettes 2, que nous appellerons banquettes par la suite pour une raison de clarté, le terme siège étant attribué au siège enfant. Chaque banquette 2 comprend un pied 3 monté mobile sur des rails 4 positionnés sur le plancher 6 du véhicule, permettant un réglage longitudinal, c'est-à-dire avant-arrière, de la position de la banquette 2. Cette dernière comprend de plus une assise 5 sur laquelle un adulte peut s'asseoir et un dossier.

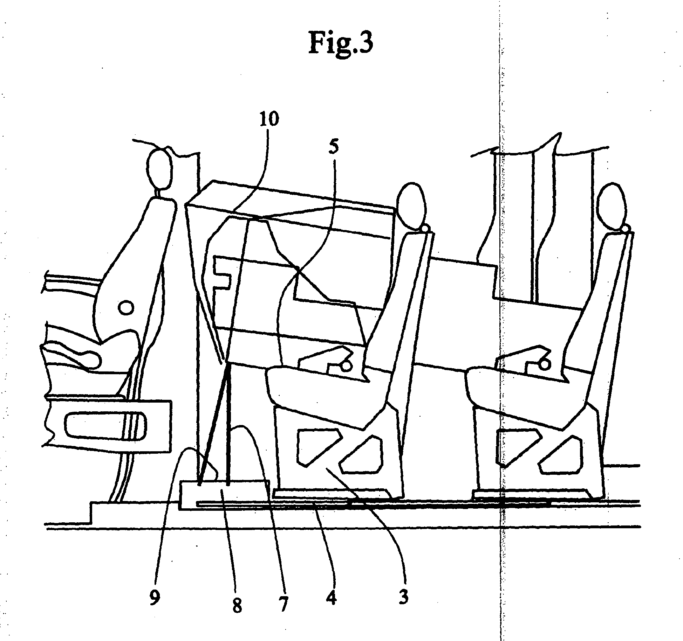

Les figures 1 et 3 illustrent l'agencement d'un siège enfant 10 sur une banquette 2, monté dos à la route et maintenu par des jambes de force ou béquilles 7. Pour permettre le positionnement de ces béquilles 7 de longueur standardisée, trop courtes pour atteindre le plancher 6, une cale ou marche 8 a été ajoutée sur le plancher 6 à l'avant des banquettes 2, dont la hauteur compense la longueur manquant aux béquilles 7. Cette marche 8 permet de créer un plancher 9 plus haut que le plancher normal 6 du véhicule au niveau des banquettes 2 où les béquilles 7 d'un siège enfant sont susceptibles d'être positionnées. La fonction de cette marche est donc de réduire la hauteur entre l'assise 5 de la banquette et le plancher 6 du véhicule, pour se rapprocher des dimensions habituelles prises en compte lors de l'élaboration des standards de sièges enfants 10. Dans ce mode d'exécution, le siège enfant reste fixé à la banquette par d'autres dispositifs de fixation complémentaires inchangés.

La figure 2 illustre une implémentation avantageuse dans laquelle le rail 4 de réglage de la position de la banquette 2 pénètre dans une ouverture 11 pratiquée dans la partie inférieure de la marche 8. Ainsi, il est possible d'avancer au maximum la banquette 2 malgré la présence de la marche 8. De plus, les extrémités latérales de la marche 8 s'étendent au minimum pour limiter leur encombrement et ne pas interférer avec les barres de seuil par exemple.

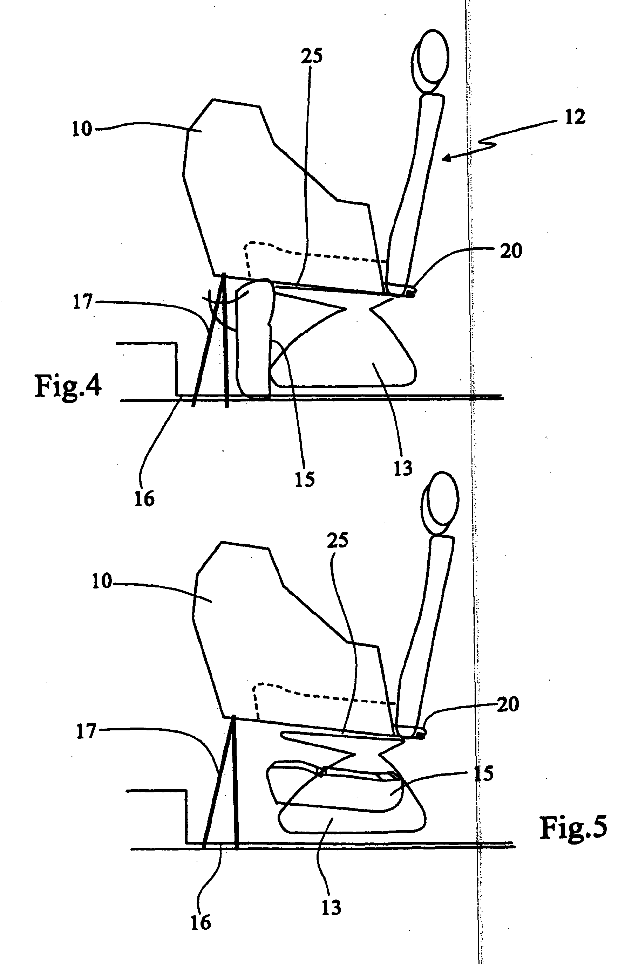

Les figures 4 à 7 illustrent l'invention, dans laquelle la réduction de la hauteur entre l'assise 15 et le plancher 16 est obtenue par une modification de l'assise, le plancher restant inchangé.

Les figures 4 à 6 illustrent schématiquement le principe de fonctionnement de ce mode d'exécution. La banquette 12 comprend une assise 15 démontable et escamotable, qui peut se loger dans un espace prévu au niveau du pied 13 de la banquette. Ainsi, lorsqu'un siège enfant 10 doit être positionné dos à la route sur la banquette 12, l'utilisateur commence par escamoter l'assise 15 pour libérer une armature support 25 plus basse, positionnée sous cette assise 15 et aménagée juste au-dessus des pied 13 de la banquette, adapté pour la réception d'un siège enfant. Le siège enfant 10 est ensuite maintenu par des béquilles standard 17, reposant sur le plancher 16 du véhicule. La seule suppression de l'assise 15 permet de gagner une dizaine de centimètres, dont l'impact est très important puisqu'il suffit à rendre un siège enfant compatible avec toute une gamme de véhicules utilitaires sur lesquels les sièges enfants ne pouvaient pas être utilisés.

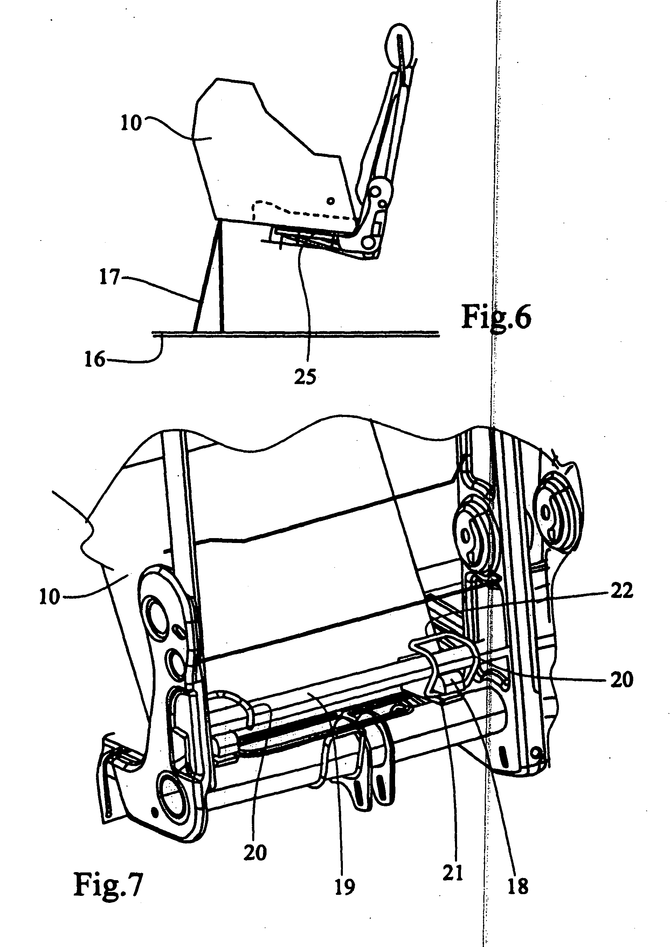

La figure 7 montre le dispositif de fixation du siège enfant 10, aménagé sur une banquette 12, selon une structure compatible avec la norme ISOFIX. Le dossier de la banquette comprend à l'arrière une traverse 19 dans sa partie basse, sur laquelle sont fixées des accroches 20 présentant une tige horizontale basse 21 et une tige horizontale haute 22. Le siège enfant 10 monté dos à la route sur l'armature 25, présentant l'assise 15 escamotée, vient se fixer par une accroche complémentaire 18 sur les parties basses 21 des accroches 20, selon une liaison mécanique conforme à la norme ISOFIX. En variante, tout autre type de liaison mécanique pourrait être implémenté.

Cette banquette 12 est aussi adaptée au positionnement du même siège enfant dans le sens de la route. Dans un tel cas non représenté, le siège 10 est positionné sur l'assise 15 restant en position normale, et vient se fixer sur les tiges hautes 22 des accroches 20 selon le même mécanisme de fixation. La distance entre les deux tiges 21, 22 des accroches 20 correspond donc sensiblement à l'épaisseur de l'assise 15.

L'invention présente l'avantage de ne pas modifier la géométrie du plancher du véhicule automobile, qui évite toute gêne pour l'assise d'un adulte ou le chargement du véhicule automobile.

Finalement, l'invention permet de réduire la hauteur entre le plancher d'un véhicule automobile et l'assise d'une banquette, en abaissant la hauteur de l'assise, et atteint bien les objets recherchés puisqu'elle présente les avantages suivants:
- cette solution reste compatible avec les sièges enfants existants, qui peuvent être agencés dos à la route sur tous véhicules, et permette notamment la compatibilité des fixations des sièges enfants avec la norme ISOFIX;
- elle n'exige que peu de changement sur les banquettes des véhicules automobiles, qui conservent leur hauteur habituelle pour l'assise d'un adulte.

L'invention est particulièrement intéressante pour les véhicules dans la catégorie des véhicules utilitaires. Toutefois, elle pourrait aussi être implémentée sur tout véhicule automobile.

## Revendications

1. Banquette pour véhicule automobile, comprenant une assise (15) démontable, reposant sur une armature (25) positionnée au-dessus d'un pied (13) de la banquette prévu pour une fixation sur le plancher, **caracterisée en ce que** l'armature (25) est adaptée pour recevoir un siège enfant dos à la route et **en ce que** la banquette comprend un dispositif de fixation (20) de siège enfant positionné dans la partie basse arrière du dossier, comprenant un premier moyen inférieur de fixation (21) adapté pour la fixation d'un siège enfant positionné sur l'armature (25) dos à la route et un second moyen supérieur de fixation (22) adapté pour la fixation d'un siège enfant positionné sur l'assise (15) face à la route.

2. Banquette pour véhicule automobile selon la revendication 1, **caractérisé en ce qu'**elle présente un logement sous l'armature (25) au niveau du pied (13) pour ranger l'assise (15) démontée.

3. Véhicule automobile (2 ; 12) comprenant une banquette selon une des revendications 1 ou 2, **caractérisé en ce que** la distance entre l'armature (25) et le plancher du véhicule automobile est adaptée à l'usage d'un siège enfant (10) reposant sur l'armature et comprenant une béquille (7 ; 17) de longueur standard capable de prendre appui sur le plancher.

## Claims

1. Bench seat for a motor vehicle, comprising a removable seat cushion (15) resting on a framework (25) positioned above a bench seat leg (13) provided for securing to the floor pan, **characterized in that** the framework (25) is appropriate for holding a child seat facing towards the rear and **in that** the bench seat comprises a child seat securing means (20) positioned in the rear bottom part of the backrest, comprising a first lower securing means (21) appropriate for securing a child seat positioned on the framework (25) and facing towards the rear and a second upper securing means (22) appropriate for securing a child seat positioned on the seat cushion (15) and facing towards the front.

2. Bench seat for a motor vehicle according to Claim 1, **characterized in that** it has a housing for stowing the removed seat cushion (15) under the framework (25) at the level of the leg (13).

3. Motor vehicle (2; 12) comprising a bench seat according to either of Claims 1 or 2, **characterized in that** the distance between the framework (25) and the floor pan of the motor vehicle is appropriate for the use of a child seat (10) resting on the framework and comprising a standard-length stand (7; 17) capable of being supported on the floor pan.

## Patentansprüche

1. Sitzbank für ein Kraftfahrzeug mit einer abmontierbaren Sitzfläche (15), die auf einem Tragrahmen (25) ruht, der über einem für eine Befestigung am Fußboden vorgesehenen Fuß (13) der Sitzbank positioniert ist, **dadurch gekennzeichnet, dass** der Tragrahmen (25) geeignet ist, einen Kindersitz mit dem Rücken in Fahrtrichtung aufzunehmen, und dass die Sitzbank eine Kindersitzbefestigungsvorrichtung (20) umfasst, die im unteren hinteren Teil der Rückenlehne positioniert ist und ein erstes unteres Befestigungsmittel (21), das für die Befestigung eines Kindersitzes, der auf dem Tragrahmen (25) mit dem Rücken in Fahrtrichtung positioniert ist, geeignet ist, und ein zweites oberes Befestigungsmittel (22) umfasst, das zur Befestigung eines auf der Sitzfläche (15) in Fahrtrichtung positionierten Kindersitzes geeignet ist.

2. Sitzbank für ein Kraftfahrzeug nach Anspruch 1, **dadurch gekennzeichnet, dass** sie unter dem Tragrahmen (25) auf der Höhe des Fußes (13) eine Aufnahme aufweist, in der die abmontierte Sitzfläche (15) verstaut wird.

3. Kraftfahrzeug (2; 12) mit einer Sitzbank nach Anspruch 1 oder 2, **dadurch gekennzeichnet, dass** der Abstand zwischen dem Tragrahmen (25) und dem Fußboden des Kraftfahrzeugs für die Verwendung eines Kindersitzes (10) geeignet ist, der auf dem Tragrahmen ruht und einen Ständer (7; 17) mit standardmäßiger Länge umfasst, der sich auf dem Fußboden abstützen kann.
